# EUROPEAN PATENT APPLICATION

(11) **EP 0 560 146 A2**
(43) Date of publication of application: **15.09.1993**
(21) Application number: 93103069.6
(22) Date of filing: 26.02.1993
(51) Int. Cl.: F16D 65/097, F16D 65/54

(54) **Disc brake assembly**

(30) Priority: 29.02.1992 JP 44145/92
(71) Applicant: AISIN SEIKI KABUSHIKI KAISHA, Kariya City Aichi Pref. (JP)
(72) Inventor: Tsuruta, Matsuhisa, Toyota City, Aichi Pref. (JP)
(74) Representative: Kovacs, Paul

(57) **Abstract**

A disc brake assembly for use with a disc rotor rotated together with wheel in a vehicle body is comprised of a pair of brake pads disposed to both sides of said disc rotor, a mounting member fixed to a stationary member of a vehicle and supporting each of the brake pads so as to be able to slide along a direction in parallel to a rotational axis of the disc rotor, a caliper member slidably supported on the mounting member so as to be movable in the axial direction of the disc rotor and for pressing each of the brake pads against faces of the disc rotor, respectively and a pair of retract springs disposed between at least one of the brake pads and the mounting member and urging the brake pad so as to separate from the disc rotor, each said spring having an arm portion fixed to an end portion of the brake pad in the rotational direction of the disc rotor, a top end portion supported on the mounting member and a curl portion which connects the arm portion with the top end portion so as to apply the elastic force to the brake pad, the curl portion being provided with at least one notch portion, re- .,e,.+;"m"

## Description

### BACKGROUND OF THE INVENTION

### 1. Field of the Invention

The present invention relates to a disc brake assembly for wheeled vehicles, and more particularly to a disc brake assembly including a retract spring which urges a brake pad to separate from a disc rotor.

### 2. Description of the Prior Art

A conventional disc brake assembly of this kind is disclosed, for example, in Japanese utility model application laid-open publication No.58(1983)-58124. This conventional disc brake assembly includes a disc rotor rotated together with a wheel in a body, a pair of brake pads disposed to both sides of said disc rotor, a mounting member fixed to a stationary member of a vehicle and supporting each of the brake pads so as to be able to slide in the parallel direction with respect to a rotational shaft of the disc rotor, a caliper member slidably supported on the mounting member so as to be movable in an axial direction of the disc rotor and pressing each of the brake pads against faces of the disc rotor, respectively and a retract spring disposed between an outer brake pad and the mounting member and urging the outer brake pad so as to separate from the disc rotor. The retract spring is formed to M-shape and is fixed to the rear surface of the outer brake pad at its about center portion. Both ends portion of the retract spring are elastically engaged with the mounting member. Thereby, when the disc brake assembly is operated and the outer brake pad is pressed toward the disc rotor by the caliper member, the retract spring is elastically deformed around the both end portions as fulcrum. When the operation of the disc brake assembly is released, the outer brake pad is separated from the disc rotor by the elastic force of the retract spring and therefore it is prevented that the outer brake pad contacts with the disc rotor after the release of the operation of the disc brake assembly.

In the above conventional disc brake assembly, however, when the partial abrasion of the outer brake pad is generated in the circumferential direction, the end portion of the retract spring moves on the mounting member and therefore the elastic force of the retract spring is not obtained in case of the release of the operation of the disc brake. Accordingly, it is not able to separate the outer brake pad from the disc rotor after the release of the operation of the disc brake assembly and therefore the dragging phenomenon in which the contact between the outer brake pad and the disc rotor is maintained after the release of the operation of the disc brake assembly is generated.

### SUMMARY OF THE INVENTION

It is, therefore, an object of the present invention to provide an improved disc brake assembly which overcomes the above drawback.

It is another object of the present invention to provide an improved disc brake assembly which can rapidly separate the brake pads from the disc rotor under any condition.

In order to achieve these objects, a disc brake assembly for use with a disc rotor rotated together with wheel in a vehicle body is comprised of a pair of brake pads disposed to both sides of said disc rotor, a mounting member fixed to a stationary member of a vehicle and supporting each of the brake pads so as to be able to slide along a direction in parallel to a rotational axis of the disc rotor, a caliper member slidably supported on the mounting member so as to be movable in the axial direction of the disc rotor and for pressing each of the brake pads against faces of the disc rotor, respectively and a pair of retract springs disposed between at least one of the brake pads and the mounting member and urging the brake pad so as to separate from the disc rotor, each said spring having an arm portion fixed to an end portion of the brake pad in the rotational direction of the disc rotor, a top end portion supported on the mounting member and a curl portion which connects the arm portion with the top end portion so as to apply the elastic force to the brake pad, the curl portion being provided with at least one notch portion, respectively.

### BRIEF DESCRIPTION OF THE DRAWINGS

Additional objects and advantages of the present invention will become more apparent from the following detailed description of preferred embodiments thereof when considered with reference to the attached drawings, in which:
Fig.1 is a side view of a first embodiment of a disc brake assembly in accordance with the present invention;
Fig.2 is an elevational view of a first embodiment of a disc brake assembly in accordance with the present invention;
Fig.3 is a partially top view which sees from an arrow A in Fig.2;
Fig.4 is a partially sectional view taken substantially along the line B - B of Fig.2;
Fig.5 is a top view which shows a retract spring of a first embodiment of a disc brake assembly in accordance with the present invention;
Fig.6 is a side view which shows a retract spring of a first embodiment of a disc brake assembly in accordance with the present invention;
Fig.7 is a side view which sees from an arrow C in Fig.6;
Fig.8 is a top view which shows a retract spring of a second embodiment of a disc brake assembly in accordance with the present invention;
Fig.9 is a side view which shows a retract spring of a second embodiment of a disc brake assembly in accordance with the present invention; and
Fig.10 is a side view which sees from an arrow D in Fig.9.

### DESCRIPTION OF THE PREFERRED

### EMBODIMENTS

A disc brake assembly constituted in accordance with preferred embodiments of the present invention will be described with reference to the attached drawings.

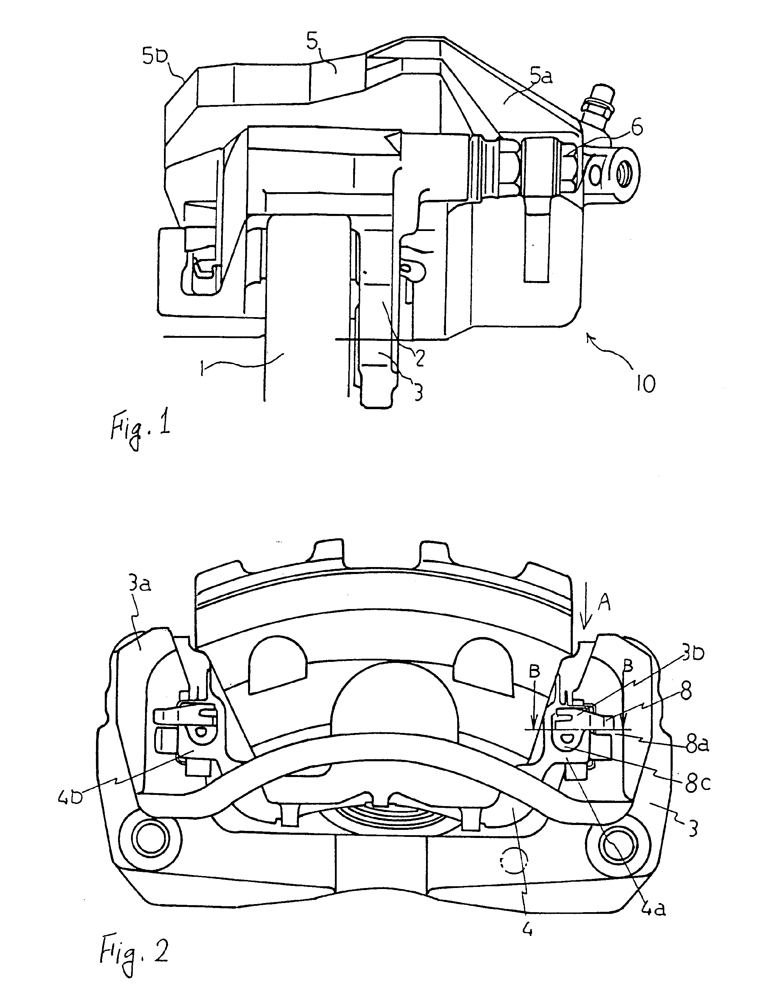

Referring to Fig.1 to Fig.3, there is schematically illustrated a disc brake assembly 10 which includes a disc rotor 1, a pair of brake pads (an inner brake pad 2, an outer brake pad 4), a mounting member 3, a caliper member 5 and retract springs 8. The inner brake pad 2 and the outer brake pad 4 are disposed on both side of the disc rotor 1 which is rotated with the wheel in a body, respectively.

The inner brake pad 2 is provided with a pair of ear portions (not shown) which are outwardly projected at center portion of both end in the rotational direction of the disc rotor 1 of its backing plate, respectively. The respective ear portions(not shown) are fitted into a pair of groove portions (not shown) which are formed in pad receiving portions (not shown) of arm portions 3a, 3b of the mounting member 3 (the mounting member 3 is fixed to a part of a vehicle body at an inner side of the disc rotor 1), respectively, whereby the inner brake pad 2 is slidably supported on the arm portions 3a, 3b of the mounting member 3 along the axial direction of the disc rotor 1.

The outer brake pad 4 is provided with a pair of ear portions 4a, 4b which are outwardly projected from a center portion of both end in the rotational direction of the disc rotor 1 of its backing plate, respectively. The respective ear portions 4a, 4b are fitted into a pair of groove portions 3a1, 3b1 which are formed in pad receiving portions 3c of the arm portions 3a, 3b of the mounting member 3, respectively, whereby the outer brake pad 4 is slidably supported on the arm portions 3a, 3b of the mounting member 3 along the axial direction of the disc rotor 1.

The caliper member 5 straddles a portion of the disc rotor 1 and is provided with a reaction portion 5b pressing the outer brake pad 4 toward an outer side surface of the disc rotor 1, a cylinder portion 5a receiving a piston (not shown) which presses the inner brake pad 2 toward to an innerside surface of the disc rotor 1 and a bridge portion 5c connecting the reaction portion 5b and the cylinder portion 5a. Further, the caliper member 5 is provided with a pair of pin bolts 6. Each of the pin bolts 6 is slidably supported on a pair of guiding holes (not shown) which are formed in the arm portions 3a, 3b of the mounting member 3 in an axial direction, respectively. Now, the sliding portions between each pin bolt 6 and each guiding hole is liquid-tightly sealed and is protected from the muddy water and so on, respectively, and the sliding portion between a cylinder hole 7 of the cylinder portion 5a and the piston is liquid-tightly sealed by a seal ring and is protected from the muddy water and so on by a boot.

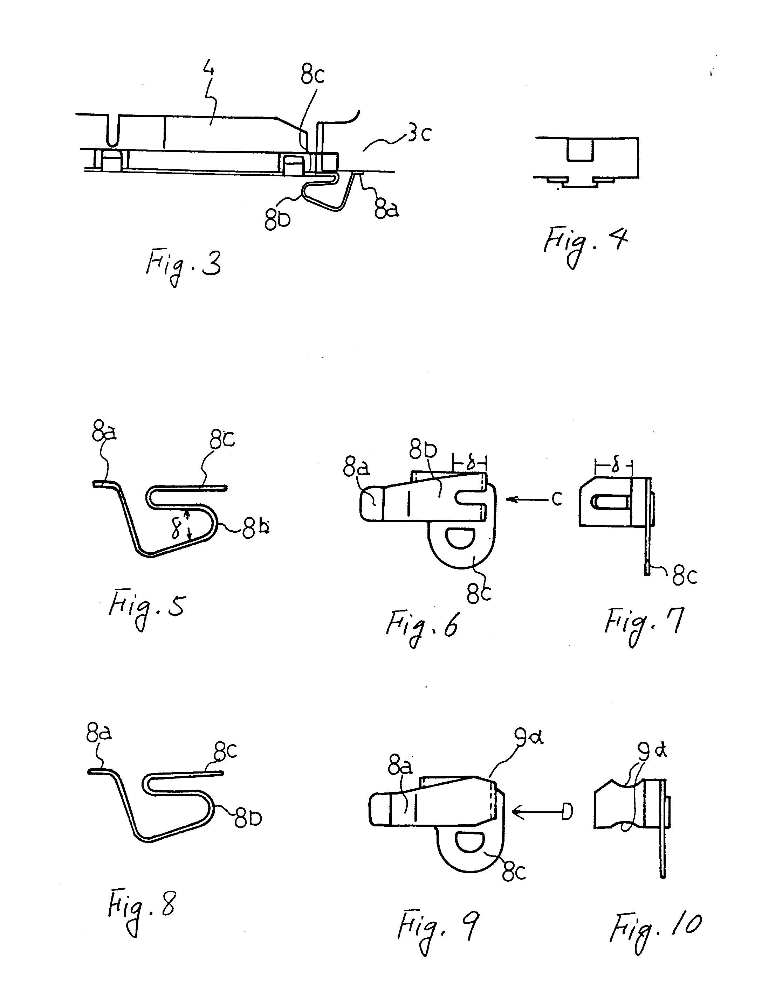

In this embodiment, the retract springs 8 are interposed between the arm portions 3a, 3b of the mounting member 3 and the ear portions 4a, 4b of the outer brake pad 4, respectively. Each retract spring 8 is formed by the bending of a metallic sheet and is provided with a top end portion 8a, a curl portion 8b and an arm portion 8c as shown in Fig.3 to Fig.6. The top end portion 8a is always contacted with the pad receiving portion 3c of the arm portion 3a (3b) of the mounting member 3 and the arm portion 8c is fixed to the ear portion 4a (4b) of the outer brake pad 4. The curl portion 8b connects the top end portion 8a with the arm portion 8c and is provided with a bending portion having a rounded apex. Thereby, when the disc brake assembly 10 is operated and the outer brake pad 4 is pressed toward the disc rotor 1 by the caliper member 5, the curl portion 8b is elastically deformed and stretched. Therefore, the elastic force of the retract spring 8 is imparted to the outer brake pad 4 so as to separate from the disc rotor 1. Furthermore, the curl portion 8b is provided with a notch portion 9 as a hole so as to be able to be easily deformed non-elastically. Thereby, when the outer brake pad 4 is largely worn and the deformation of the curl portion 8b is more than a predetermined value (elastic limit), the curl portion 8b is deformed non-elastically and therefore it is prevented that the outer brake pad 4 is separated from the disc rotor by the elastic force of the retract spring 8 too much after the release of the operation of the disc brake assembly 10. Now, the elastic limit of the retract spring 8 is set by the length δ of the notch portion 9 in Fig.6 and Fig.7.

The above-described embodiment of the disc brake assembly operates as follows. Referring to Fig.1 and Fig.2, when the hydraulic pressure is applied to the cylinder hole 7 of the cylinder portion 5a of the caliper member 5, the piston (not shown) presses the inner brake pad 2 toward the inner side surface of the disc rotor 1 and the reaction portion 5b presses the outer brake pad 4 toward the outer side surface of the disc rotor 10 by a reaction force of the hydraulic pressure pressing the inner brake pad 2 through the piston (not shown). Thereby, both brake pads 2, 4 are fictionally engaged with the disc rotor 1 and the wheel which is rotated with the disc rotor 1 in a body is braked.

In this condition, the arm portion 8c of the retract spring 8 is moved toward the disc rotor 1 with the outer brake pad 4 and the top end portion 8a of the retract spring 8 maintains contact with the pad receiving portion 3c of the arm portion 3a (3b) of the mounting member 3. Thereby, the curl portion 8b is elastically deformed and stretched. When the hydraulic pressure which is applied to the cylinder 7 is released, the outer brake pad 4 is rapidly separated from the disc rotor 1 by the elastic force of the retract spring 8. Therefore, it is prevented that the dragging phenomenon in which the contact between the outer brake pad 4 and the disc rotor 1 is maintained after the release of the operation of the disc brake assembly 10 is generated.

In case the outer brake pad 4 is worn, the arm portion 8c of the retract spring 8 is moved toward the disc rotor 1 with the outer brake pad 4 and therefore the curl portion 8b is elastically deformed. When the outer brake pad 4 is largely worn and the elastic deformation of the curl portion 8b exceeds the elastic limit which is set by the length δ of the notch portion 9 in Fig.6 and Fig.7, the curl portion 8b is deformed non-elastically. After the curl portion 8b is deformed non-elastically, the condition which the curl portion 8b was deformed non-elastically becomes a base condition and the curl portion 8b is elastically deformed from this base condition in response to the movement of the arm portion 8c. When the hydraulic pressure which is applied to the cylinder 7 is released, the outer brake pad 4 is rapidly separated from the disc rotor 1 by the elastic force of the retract spring 8 which is established by the elastic deformation from the base condition. Accordingly, it is prevented that the outer brake pad 4 is separated from the disc rotor by the elastic force of the retract spring 8 too much after the release of the operation of the disc brake assembly 10 and therefore the clearance between the disc rotor 1 and the outer brake pad 4 is appropriately maintained.

In case the partial abrasion of the outer brake pad 4 is generated in the circumferential direction and the outer brake pad 4 of the trailing side (the entry side) in the rotational direction of the disc rotor 1 is largely worn, the elastic deformation of the curl portion 8b of the retract spring 8 which is fixed to the outer brake pad 4 of the trailing side exceeds the elastic limit by the large movement of the arm portion 8c in response to the movement of the outer brake pad 4 and the curl portion 8b is deformed non-elastically. When the hydraulic pressure which is applied to the cylinder 7 is released, the outer brake pad 4 of the trailing side is rapidly separated from the disc rotor 1 by the elastic force of the retract spring 8 which is established by the elastic deformation from the base condition (non-elastically deformed condition). Further, the outer brake pad 4 of the leading side (the exit side) is rapidly separated from the disc rotor 1 by the elastic force of the retract spring 8. Accordingly, it is prevented that the outer brake pad 4 is separated from the disc rotor by the elastic force of the retract spring 8 too much after the release of the operation of the disc brake assembly 10 and therefore the clearance between the disc rotor 1 and the outer brake pad 4 is appropriately maintained.

Fig.8 to Fig.10 show a second embodiment of the retract spring 8 of the present invention. In this embodiment, a semicircular notch portion 9a is formed on both edges of the apex of the curl portion 8b of the retract spring 8. Thereby, as mentioned above, when the outer brake pad 4 is largely worn and the deformation of the curl portion 8b is more than predetermined value (elastic limit), the curl portion 8b is deformed non-elastically and therefore it is prevented that the outer brake pad 4 is separated from the disc rotor by the elastic force of the retract spring 8 too much after the release of the operation of the disc brake assembly 10.

Now, in the above mentioned embodiments, the retract springs 8 are interposed between the arm portions 3a, 3b of the mounting member 3 and the ear portions 4a, 4b of the outer brake pad 4, respectively. However, it is able to interpose the retract springs 8 between the arm portions 3a, 3b of the mounting member 3 and the ear portions (not shown) of the inner brake pad 2, respectively too. Furthermore, it is able to form the retract spring 8 by the other elastic member such as rubber.

As mentioned above, according to the present invention, since the brake pad is separated from the disc rotor by the elastic force of the retract spring under any condition, it is able to prevent that the dragging phenomenon which the contact between the brake pad and the disc rotor is maintained after the release of the operation of the disc brake assembly is generated.

Furthermore, according to the present invention, when the brake pad is largely worn and therefore the curl portion of the retract spring is largely deformed in response to the movement of the brake pad, the deformation of the curl portion exceeds the elastic limit which is set by the length of the notch portion and the curl portion is deformed non-elastically. After the curl portion was deformed non-elastically, the condition which the curl portion was deformed non-elastically becomes a base condition and the curl portion is elastically deformed from this base condition in response to the movement of the arm portion of the retract spring. Thereby, when the operation of the disc brake assembly is released, the brake pad is rapidly separated from the disc rotor by the elastic force of the retract spring which is established by the elastic deformation from the base condition. Accordingly, it is prevented that the brake pad is separated from the disc rotor by the elastic force of the retract spring too much after the release of the operation of the disc brake assembly and therefore it is able to maintain the constant clearance between the disc rotor and the outer brake pad in response to the wear of the brake pad.

The principles, preferred embodiments and modes of operation of the present invention have been described in the foregoing description. The invention which is intended to be protected herein should not, however, be construed as limited to the particular forms disclosed, as these are to be regarded as illustrative ratherthan restrictive. Variations and changes may be made by those skilled in the art without departing from the spirit of the present invention. Accordingly, the foregoing detailed description should be considered exemplary in nature and not limited to the scope and spirit of the invention as set forth in the appended claims.

## Claims

1. A disc brake assembly for use with a disc rotor rotated together with wheel in a vehicle body comprising;
a pair of brake pads disposed to both sides of said disc rotor,
a mounting member fixed to a stationary member of a vehicle and supporting each of the brake pads so as to be able to slide along a direction in parallel to a rotational axis of the disc rotor,
a caliper member slidably supported on the mounting member so as to be movable in the axial direction of the disc rotor and for pressing each of the brake pads against faces of the disc rotor, respectively and
a pair of retract springs disposed between at least one of the brake pads and the mounting member and urging the brake pad so as to separate from the disc rotor, each said spring having an arm portion fixed to an end portion of the brake pad in the rotational direction of the disc rotor, a top end portion supported on the mounting member and a curl portion which connects the arm portion with the top end portion so as to apply the elastic force to the brake pad, the curl portion being provided with at least one notch portion, respectively.

2. A disc brake assembly as recited in claim 1, wherein the mounting member is provided with a pair of arm portions in which a pair of grooves extending toward the axial direction of said disc rotor are provided therein, the brake pads are each provided with a pair of ear portions which are outwardly projected at the outer side of both ends of the brake pads in the rotational direction of said disc rotor, respectively and which are fitted into the pair of grooves in the arm portion of the mounting member so as to be slidably supported on the arm portion of the mounting member along the axial direction of said disc rotor and the retract springs are interposed between the ear portions of at least one of the brake pads and the arm portions of the mounting member, respectively, and the arm portions of the retract springs are fixed to the ear portions of at least one of the brake pads.

3. A disc brake assembly as recited in claim 2, wherein the curl portion of the retract spring includes a bending portion and the notch portion is formed as a hole at an apex of the bending portion.

4. A disc brake assembly as recited in claim 2, wherein the curl portion of the retract spring includes a bending portion and the notch portion is formed as notches at both edges of an apex of the bending portion.
